# EUROPEAN PATENT SPECIFICATION

(11) **EP 3 140 054 B1**
(45) Date of publication and mention of the grant of the patent: **13.09.2023**
(21) Application number: 15723811.4
(22) Date of filing: 08.05.2015
(51) Int. Cl.: B09B 3/00

(54) **METHOD FOR RESIN, SOLIDS, AND SLUDGE SOLIDIFICATION, STABILIZATION, AND REDUCTION OF DISPOSAL VOLUME**
VERFAHREN FÜR HARZ, FESTSTOFFE UND SCHLAMMVERFESTIGUNG, STABILISIERUNG UND REDUZIERUNG VON ENTSORGUNGSVOLUMEN
PROCÉDÉ DE SOLIDIFICATION DE RÉSINE, DE SOLIDES ET DE BOUES, STABILISATION ET RÉDUCTION D'UN VOLUME DE REJET

(30) Priority: 08.05.2014 US 201461990513 P; 07.05.2015 US 201514706309
(43) Date of publication of application: 15.03.2017
(73) Proprietor: Avantech, LLC., Columbia SC 29209 (US)
(72) Inventor: BRUNSELL, Dennis A., Knoxville, Tennessee 37932 (US); HENNING, William M., Greenback, Tennessee 37742 (US); BEETS, Larry E., Knoxville, Tennessee 37932 (US)
(74) Representative: Thurston, Joanna
(86) International application number: PCT/US2015/029835
(87) International publication number: WO 2015/171987

(56) References cited:
- EP-B1- 1 639 606
- JP-A- S5 481 500
- US-A- 5 962 630

## Description

### FIELD OF THE INVENTION

The present invention relates to a method for resin and sludge solidification, stabilization, and waste volume reduction, where particulate solid waste contained therein and being treated by the process are hazardous or radioactive.

### BACKGROUND OF THE INVENTION

Current methods of resin and sludge solidification/stabilization involve the use of either an *in situ* process or mixing process that are, at best, able to provide a range where there is no volume increase to a range where the increase in volume is by as much as six times the starting original volume of the waste.

In the past cement was the original choice for resin and sludge solidification, but the resulting product was usually three to six times the original waste volume. Cement was often not a very strong product due to its incompatibility with subject wastes, with the cement often crumbling as rehydration of the solidified resin and other sludge components occurred. Often, other chemicals present in the resin or sludge were also not compatible with the cement matrix resulting in the same loss in strength problem. In particular, the ion exchange resin, when solidified with cement, resulted in dehydration of the ion exchange resin as the water was drawn from the resin into the cement matrix. Later, as additional water entered the cement matrix from the environment, the resin rehydrated, resulting in swelling that could then cause the cement to crumble.

Bitumen is another product used in the past for solidification of resin, sludge, and liquids. The bitumen was melted at an elevated temperature and the waste matter was added, causing the water to flash off as steam. The bitumen was flammable at the elevated temperatures, and this resulted in fires and the need for an extensive fire suppression system. The waste also had to be added slowly to prevent steam eruptions through the exhaust system, which were known to occur. Although the bitumen provided higher loading of waste per unit volume of waste, the volume increase for resin and sludge was typically about twice the starting original waste volume.

In the 1980's Dow Chemical developed a vinyl ester styrene polymer system that was able to solidify resins, sludges, and aqueous based liquids using a mixing process. The process involved loading a drum with about 40% polymer and then adding the waste slowly into the drum while using a high shear mixing process. This process was able to limit the increase in volume of the waste to about 1.6 times the original waste volume. The polymer was much more stable than the cement or bitumen and produced a much stronger product. This product was less sensitive to many chemicals and lowered leachability ions by a factor of ten. This was the first product that had approved topical report by the NRC. This polymer was still sensitive to some chemical interactions, including the removal of one of the components during processing, resulting in failure to solidify properly. The styrene, which was a major component in the polymer, made the polymer highly flammable prior to polymerization. Thus, this too required sophisticated fire suppression systems.

In the early 1990's Diversified Technologies Services, Inc. (DTS), developed an *in situ* process that was used on resin and other granular materials that had sufficient permeability to permit the vinyl ester polymer to be pulled through a bed of resin with up to six feet of depth. Resin had to be depleted; otherwise the promoter could be stripped, resulting in failure to solidify. The polymer was also very sensitive to temperature, which could result in premature solidification. The polymer also generated quite intense exotherms (i.e., products or compounds which are exothermic during their polymerization), which resulted in too rapid a cure, often causing cracks to develop through the formed monolith, which potentially increased leachability and decreased the overall strength of the monolith. The advantage of this process was there was no volume increase, and it had the ability to solidify in a final waste container with only gross dewatering without mixing.

DTS later developed an advanced polymer that was much less sensitive to chemical interactions. The polymer formulation did not involve the use of catalysts or promoters. It was thus easier to control gelation, and polymerization time could be extended to many hours or even days. The longer and slower cures resulted in much lower exothermic reaction temperatures, and thus cracking was virtually eliminated. This also decreased the leachability of the matrix. The slower polymerization reaction permitted much longer times to pull the polymer through the resin before gelation of the polymer was subject to occur. Further, the exotherm temperature was normally well below the boiling temperature of water, thus assuring that no steam vents would occur. This *in situ* process did not increase the volume of the waste, as only a thin cap of the polymer was required, and the solidification could occur in large containers (200 ft³ or 6 m³). Unfortunately, this process did not work with sludges, fine solids, or liquids.

The French used the same type of polymer but utilized a propeller type mixing process similar to that used in the original vinyl ester styrene process. The mixing required a larger amount of polymer because the mixing caused the resin to separate from its normally compact configuration to maintain enough fluidity to permit mixing, thus increasing the final waste volume to 1.4 times the original waste volume. The mixing required that drums also be utilized rather than larger containers.

US-A-5962630 discloses a further known prior art.

Thus, objects of the present invention include, without limitation, the improvement of waste loading per unit volume of waste being processed; the minimization of the use of polymer per unit volume of waste; the ability to use essentially any size and shape of container for loading the waste; the ability to decrease the leachability of the waste being processed; and the ability to minimize any personnel exposure to radiation or chemicals characteristic of such treated wastes by making the process automated.

A further object of the present invention is to substantially dewater the sluice volume of the subject waste being treated, when needed, to minimize the amount of water in the waste to be dried and evaporated.

Yet another object of the present invention is to have the ability to utilize various kinds of equipment to perform drying, when needed.

Another object of the present invention is to provide storage and metering as a part of the present invention's method and process, such that the storage bin provides a buffer area so the batch size of the mixer can be sized according to the waste container size, and the metering aspect of the bin facilitates the feed rate of the dried solids, matching the polymer feed rate to both minimize the polymer usage and assure that the polymer matrix is continuous.

A further object of the present invention is to provide polymer metering such that needed components of the polymer chosen for use in the invention can be supplied in required proportions to assure proper solidification and viscosity.

A further object of the present invention is to employ high shear force in mixing the polymer and the waste, such as that provided by a continuous mixer, to minimize the waste volume so that the polymer/waste mixture resembles a paste being extruded from the mixer. In this regard it is an object of the present invention to employ a mixer that has the ability to extrude or extract most if not all of the polymer waste mixture from the mixer without the need for adding any secondary materials. Minimizing the polymer usage both decreases the costly waste volume and the amount of the polymer required.

It is yet a further object of the present invention to employ a leveling step to address high waste/polymer viscosity with the object of loading the waste container of the method by greater than 95%, thus maximizing waste in the given burial container by permitting the container to be filled to the maximum level possible without overflowing the container.

Another object of the present invention is to provide more consistent curing of the polymer and waste so that the exothermic temperatures associated with the polymer and waste are lower.

Another object of the present invention is to provide automated closure and transfer to provide protection to working personnel from radiation or toxic chemicals.

Yet another object of the present invention is to change the chemical structure of the ion exchange media in such a way that rehydration is not permitted, to further reduce the volume of the waste media such that total volume reduction of about 70% from the original volume is achieved, and to prevent expansion of volume upon later exposure of this waste material to water because the waste material achieves and maintains a hydrophobic condition.

Therefore, the teachings of the present method were developed to overcome the problematic issues in the prior art. It will, therefore, be understood by those skilled in the technology of solidifying radioactive or toxic particulate solids that substantial and distinguishable methods and functional advantages are realized in the present invention over the prior art, such as the ability to achieve greater waste volume reduction and stabilization. It will also be appreciated that the present invention's efficiency, adaptability of operation through the use of different types of equipment, diverse utility, and distinguishable functional applications all serve as important bases for novelty of the present invention.

### SUMMARY

The present invention recognizes and addresses disadvantages of prior art constructions and methods. The present invention is defined by independent claim 1.

### BRIEF DESCRIPTION OF THE DRAWINGS

A full and enabling disclosure of the present invention, including the best mode thereof directed to one of ordinary skill in the art, is set forth in the specification, which makes reference to the appended drawings, in which:
Figure 1 is a schematic and representational view of a method in accordance with the present invention.
Figure 2 is a schematic and representational view of a method in accordance with the present invention where a specific volume reduction step is not employed, but a dewater step is employed.
Figure 3A is a schematic and representational view of a method in accordance with the present invention where a dryer or dryer means, without dewatering, is employed.
Figure 3B is a schematic and representational view of a method in accordance with the present invention where a high heating dryer or high heating means, without dewatering, is employed, to raise the temperature to release the water of hydration of a solid or particulate solid waste.
Figure 3C is a schematic and representational view of a method in accordance with the present invention where a dewater unit, means, or sub-system and a dryer unit means or sub-system are employed together in a combined means to accomplish dewatering and drying or evaporation.
Figure 4 illustrates details of a waste container in which the polymer waste mixture can be loaded and stored for transport and related purposes.
Figure 5 illustrates details of a waste container in which the polymer waste mixture can be loaded and stored for transport and related purposes.
Figure 6 illustrates details of a waste container in which the polymer waste mixture can be loaded and stored for transport and related purposes.
Figure 7 illustrates details of a waste container in which the polymer waste mixture can be loaded and stored for transport and related purposes.
Figure 8 illustrates details of a waste container in which the polymer waste mixture can be loaded and stored for transport and related.
Figure 9 is a photographic illustration of a continuous mixer which can be employed in the mixing step.

### REFERENCE NUMERALS

- 10: Method, process, and/or system of the present invention, or solidification method, process, or system
- 12: Dewatering pretreatment step or sub-system of the present Method (10)
- 12A: Individual Dewatering or Dewater sub-system(s) or means
- 12B: Dewater/Dryer combination or Dewatering/Drying combination, unit, or means
- 14: Storage or solids area, tank, or bin, or recycle area, tank, or bin
- 15: Sluice or supply method, or sluice line or communication from the storage or solids area, tank, or bin, or recycle area, tank, or bin (14) to the Dewater/Dryer combination (12B), dewater sub-system (12A), or Dryer (17)
- 15A: Recycle Line or Water Disposal Line, or line back in to recycle to the Storage or solids area, tank, or bin (14)
- 16: Drying step or sub-system, drying of the resin or sludge waste
- 16H: Heating the resin material containing the waste to a higher temperature of from about 225 ° C to about 250°C
- 17: Dryer, such as a microwave heater as an example, without limitation, of one type of preferred dryer to be used in step (16), and other similar or related Dryer means or drying and heating equipment
- 17H: High Heating Dryer or High Heating means; for example, without limitation: hot oil and/or high pressure steam, electrical resistance heating and microwave heating means
- 18: Storage and metering step, or sub-system in the present invention
- 19: Polymer mixer or mixers used in preferred embodiments of the invention, or Self-Cleaning Mixer
- 50: Waste Container or Solidified Waste Container or containers
- 20: Polymer metering step or sub-system
- 21: Polymer chosen for use within preferred embodiments of the present invention, which is preferably chosen from epoxide (epoxy) groups or other preferred thermosetting resins or polymers
- 20A: Metering pump or pumps used in step (20)
- 22: Sluice Bin, or area, or feed bin, or feed area; each leading to the mixer (30)
- 30: Polymer/waste mixing or Polymer/Particulate solid waste mixing
- 40: Waste Container distribution step or sub-system, or Waste Distribution step or sub-system
- 52: Waste container closure and Transport step or sub-system, or Automated Closure and Transport step or sub-system
- 24: Polymer container or supply area, or containers in which the polymer is provided in from the manufacturer or supplier having one to five components
- 54: Monolith, Cured Monolith, or Polymerized or fully polymerized Monolith

### DETAILED DESCRIPTION OF PREFERRED EMBODIMENTS

Reference will now be made in detail to the following:

The Method 10 includes removing excess water from the waste material, mixing at least one polymer with the waste material to provide a polymer-waste mixture, and curing the polymer in the polymer-waste mixture to provide a solidified monolith waste form having a continuous polymer matrix encapsulating the waste material.

Occasionally, the Method 10 encompasses the following steps and/or sub-systems: dewatering the waste material to remove excess water, drying the waste material, storing and metering the waste material to a mixer, metering a polymer to the mixer, mixing the polymer and the waste material in the mixer to provide a polymer-waste mixture, distributing the polymer-waste mixture among a plurality of waste containers, and curing the polymer in the polymer-waste mixture to provide a solidified monolith waste form having a continuous polymer matrix encapsulating the waste material.

### Dewatering Pretreatment Step or Sub-system (12)

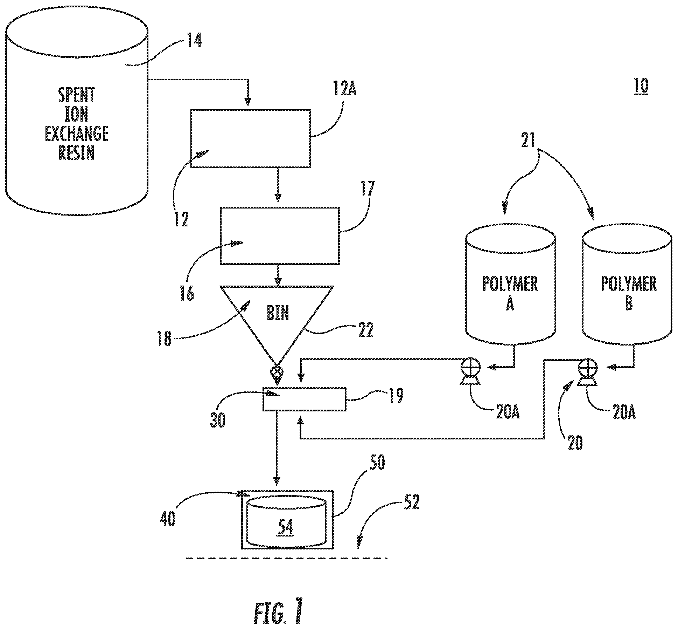

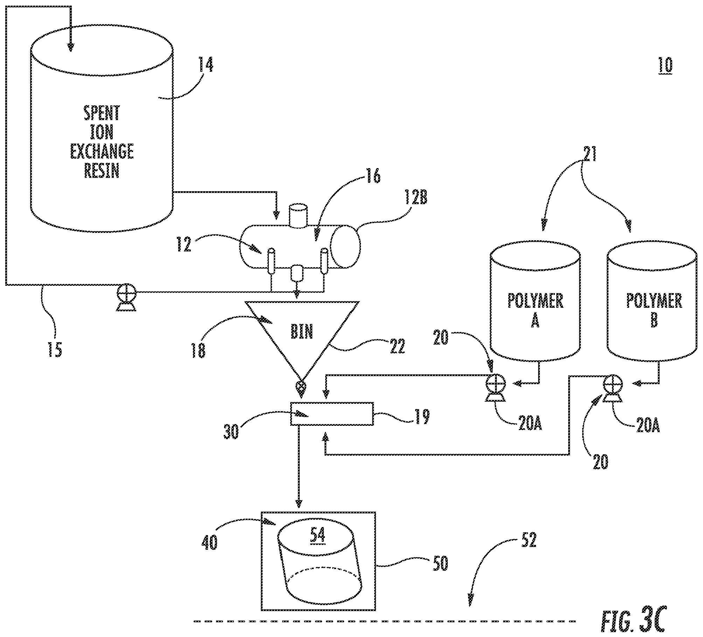

In the Dewatering pretreatment step (12) as shown and illustrated, by example, in FIGS. 1, 2, 3B and 3C; the resin, filter solids, particulates, or sludges processed by the present Method 10 are preferably transferred by a water sluicing process from the storage area, tank, or bin 14 to the Dewatering equipment 12A or Dewatering/Drying combination sub-system, equipment, or means 12B. The initial concentration of solids is often less than 30%; thus, removal of excess water is important in this preferred embodiment to both minimize the final waste volume and ensure that all the waste is micro-encapsulated for purposes of the invention. The Dewatering step 12 comprises gross dewatering of the sluice volume from about 50 to about 95%. In other embodiments, the Dewatering step 12 comprises gross dewatering of the sluice volume from about 75 to about 90%. Depending on the final moisture content desired in a given job, this can be accomplished using dewatering screens or filters as part and parcel of the Dewater/Dryer Combination 12B, as represented schematically or diagrammatically in FIG. 3C, for removal of most of this water. A centrifuge is preferred as equipment to be utilized in dewatering, although other types of equipment can be utilized in the present Method 10.

When drying is required by virtue of the contained water characteristics of a given solid being processed, complete dewatering may not have to be used to remove all interstitial water but only gross amounts of water necessary to minimize the amount of water to be evaporated. Microwave heating is preferable, but other heating or drying equipment can be used, such as a paddle or ribbon dryer, hollow-flight, filter, conveyor, or a reactor-type dryer. The simple insertion of a wedge wire or other similar screen or filter media into the dryer as resin or resin with filter media is being sluiced into the dryer can also be utilized. A vacuum or air operated diaphragm pump is used to suck out the interstitial water. The process is terminated when the proper level of solids is measured in the dryer. Pumping or vacuuming of the water from the dryer is terminated when the amount of water being removed is considered acceptable. In the case of at least one embodiment, air is drawn through the media being dried to remove additional moisture. The screens are then withdrawn from the dryer prior to starting the paddles.

The resin and coarser particulate form a pre-coat on the screens, and the sedentary nature of the resin around the screens and at the bottom of the Dryer 12B will cause it to retain most of the very fine particulate. The sluice water is returned to the solids tank or bin 14 for reuse during the next sluice or discharge to a water treatment area. Thus, any fine particulate initially passing the screens is returned to the Dryer 12B during the next sluice. Other approaches, within preferred embodiments, include rotary vacuum or belt filters, Rotamat^{®} compactor, and similar types of dewatering equipment 12A or as embodied in unit 12B.

### 2. Drying of the resin or sludge waste step or sub-system (16)

The advantage of using drying in a preferred embodiment of the present Method 10 is that the resin and some of the other filter or sludge materials will have a significant loss of volume, thus decreasing the waste volume by approximately the same percentage. One preferred means or type of equipment for use in the drying step or sub-system of the present Method 10 is microwave heating. There are several additional types of drying equipment that can be utilized in preferred embodiments of the present Method 10, as units 12A or in a combination unit 12B. These can include, by example and without limitation, the utilization of steam, hot oil, infrared, hot air, vacuum, and other similar or related equipment or means.

After drying, the waste can be cooled to a lower temperature to slow polymerization if desired and selected. Utilization of cooling technologies such as chilled water, cooling water, refrigerants, and/or like means can be employed to bring about cooling in the drying equipment or a separate piece of equipment being used such as a conveyor, storage area, or other equipment positionally associated with drying equipment. Additionally, the waste can be permitted to sit and cool off and, for example, be processed the next day. Alternatively, the polymer may be adjusted to permit a higher feed temperature.

Surface area and contact with the heated area are important in the present invention for heat transfer to evaporate the water in non-radiant applications. Thus, equipment such as a Paddle Dryer or ribbon dryers, heated screw conveyors, or similar equipment are good at heat transfer. These can be enhanced by using a vacuum to lower the boiling point of the water, thus creating a larger temperature differential and increasing heat transfer. In preferred embodiments of the present invention, the vacuum can easily or readily lower the boiling temperature of water by 30-50°C.

The vacuum also provides an easy mechanism within the present invention to transfer the moisture out of the system. The paddles, ribbons, or screws (as so employed) continually mix the waste, thus bringing new waste into contact with the hot surface and moving hot waste to lower temperature areas.

Several methods can be used to measure the endpoint of a drying cycle. These include, by example and without limitation, humidistat, temperature probes, level measurement, color, and other similar means.

In additional aspects, the present Method 10 involves heating the resin material containing the waste to a temperature at which the functional groups decompose to nonfunctional daughter products of which some may leave the waste matrix, thus further decreasing the volume of the matrix. It has been found in the present invention that this decomposition occurs at temperatures typically greater than 150°C and, in many cases, less than 250°C. Thus, step or subsystem 16H involves heating the waste material to a temperature of from about 150°C to a temperature of about 250°C. However, in order to not generate acids, this heating at step or subsystem 16H should not proceed for an extended period of time; instead, extended standard drying should be maintained at less than about 150°C. Accordingly, the preferred method will involve only removal of water which will decrease the volume by about 50%. In other embodiments, the method may comprise water volume reduction from about 30 to about 70%.

In further aspects of drying, the use of the High Heating Dryer or High Heating means 17H is employed in certain embodiments, and High Heating means 17H can be utilized either with or without the Dryer 17. Examples of such equipment, without limitation, are: hot oil and/or high pressure steam, electrical resistance heating, and microwave heating means. It has been found that this sub-system often involves a color change, which may be indicative of the chemical change. This chemical change involves the generation of sulfur oxide that is then captured in a scrubber to prevent entry into the atmosphere. In this case the secondary waste may be sodium sulfate volume, as the associated water is returned as sluice water.

The volume reduction which occurs in step 16H has two major cost advantages in the waste processing economics: 1) The resin volume is reduced to an amount which can range up to about 75-80%; and 2) the amount of polymer required to solidify this waste is decreased by about 75-80%, depending upon the type of solidification process being utilized. Additionally, a great advantage is achieved in that the step 16H, involving this drying chemical conversion subprocess, can also be utilized with other types of solidification processes such as cement, ceramic grout, other thermosetting polymers, and simple burial as a dry solid disposed as dirt like material, in bulk containers, or as filler material where burial is combined with bulk scrap or equipment.

Thus, by employing step 16H, as indicated above, the chemical structure of the ion exchange media is changed in such a way that rehydration is not permitted, and the waste material volume is further reduced such that total volume reduction may be from about 0 to about 80% from the original volume. In further embodiments, the waste material volume is reduced such that the total volume reduction may be from about 50 to about 75%. Thus, later exposure of this waste material to water results in no expansion of volume because the waste material achieves and maintains a hydrophobic condition.

### 3. Storage and Metering Step or Sub-system (18)

In considering the Storage and metering step 18, and in view of the fact that the polymer mixer 19 has the potential for very high capacity, the bin or area 22 is important in the present process 10, where the mixer requires a known amount of dried waste prior to starting the polymer mixer operation, as many driers are often continuous in processing. The bin 22 provides a buffer area so the batch size of the mixer can be sized according to the size of the waste container 50 containing solidified waste selected for use in the present process.

The metering aspect and monitoring flow of particulate solids in the bin 22 is also important, as the feed rate of the dried solids must match the polymer feed rate for the purpose of both minimizing the polymer usage and assuring that the polymer matrix established as a part of the present process 10 is continuous in its makeup, i.e., such that there are no voids in the alignment of the solids. The metering can be done by either volumetric or gravimetric means. Volumetric means is a preferred choice in the invention, as it is more accurate. However, gravimetric means is often useful within the scope of the invention as confirmation that there is not a blockage or bridging in the feed bin 22 that might restrict flow to the feeder of the mixer 30.

### 4. Polymer metering step or sub-system (20) and relative aspects regarding selection of Polymer

The goal of the present invention in this regard is to process the selected polymer to form a monolith where the polymer is in continuous phase and impermeable with the waste capsule surrounded by polymer. The polymers selected for use in the present Method 10 should be reasonably subject to being monitored such that the flow or positional alignment of particulate solids within the polymer has substantially no voids.

In this regard, the thermosetting polymers, also known as thermosets, are preferred for use in the present Method 10. For example, epoxies have low viscosity and, generally, a cure time of about less than one hour to about forty-eight hours. Longer cure times are possible but are not always advantageous.

Epoxies selected for use in the present Method 10 can maintain a cure temperature that increases temperature of the polymer during thermosetting by less than 50°C and thus a temperature below a point which avoids fracture and which is consistent with the temperature limits of an immediate container being utilized. Within the teachings of the present invention one does not want the mixing temperature to be too high, in that it might cause full polymerization within the mixing container itself rather than in the Solidified Waste Container 50, discussed in more detail below. Current formulations have been developed that permit the polymerization of resin entering at a temperature of 100°C, although higher temperatures may be available with other formulations. In monitoring the exotherm temperature, this proves to be indicative of sufficient exotherm of this polymer example and other examples discussed herein. Other preferred examples of thermosets for use in the present Method 10 include vinyl ester networks or resins having variable styrene contents (e.g., vinyl ester-styrene), polyester resins systems, or fiberglass resin systems. Other such resins, polymers, systems or polymer networks can be used in keeping with the objectives, goals and preferred limitations set forth herein.

In a special preferred embodiment, a temperature equal to about 65°C (about 150 degrees F.) can be employed when an option is selected in the mixing step to employ a cover polymer.

The metering pumps 20A are electronically slaved or functionally tied together in a preferred embodimentto assure each operates at the proper flow rate that is proportional to the other or others so tied or linked together. However, other similar means can be utilized within the scope of the present invention. The polymer can either be stored in their shipping containers or transferred into tanks where temperature can be more easily maintained.

Because polymer flow of each component is essential during the mixer operation, a dual system of measuring continuous feed of the polymer may be used as a crosscheck in a preferred embodiment but is not required. A flow switch or meter is utilized in each line feeding the mixer 19, and continuous level monitoring of the component feed tanks used assures a continuous decrease during pump operation as well as a determination as to whether sufficient component polymer is present for each planned batch.

### 5. Polymer/Waste Mixing (30)

One of the major factors in minimizing the waste volume produced for a given volume of feed is the type of mixer utilized to mix the polymer and the waste. It has previously been seen that the propeller in a drum or other container has a tendency to increase the volume by about 40%. This type of mixer also limits the size and shape of the disposal container to permit both proper mixing and assure that the solids are incorporated into the matrix. Several types of mixers can be utilized, but generally the higher the shear force, the more effective the mixer is at minimizing the waste volume. Thus, care may be required to either install screening devices and/or magnetic separators to prevent particles from being crushed by close tolerances such that small pieces of debris could result in jamming the lobes, screws, or other pinch points. In another embodiment, the tolerances are increased to permit larger particles to pass and to prevent destroying the resin beads that may contain water within the bead so as not to express the water from the bead but still provide high shear to minimize the polymer required to effect a complete encapsulation of the bead maintaining the polymer as the continuous matrix.

In some cases the destruction of the bead or other granules may decrease overall volume by eliminating air from the porous media. In this embodiment the tolerances of the mixer are decreased, causing rupture of the beads. The polymer-waste mixture should resemble a paste being extruded from the mixer.

An important aspect of the mixer is the ability to extrude or extract most, if not all, of the polymer waste mixture from the mixer without the addition of any secondary materials. The amount of polymer remaining must be small enough that the driving motors are powerful enough to break adhesion of the polymer and discharge the destroyed polymer as chips to be encapsulated into the next batch of polymer waste. Relatively close tolerances that force the polymer forward through the mixer have a self-clearing/cleaning action. Mixers utilized that do not have this principle will gradually build up a coating resulting in both loss of efficiency and waste buildup, thus potentially increasing the dose or amount of hazardous material remaining. Therefore, in preferred embodiments of carrying out the use of the present Method 10, it is important to clean or clear waste from the mixer or for the mixer 19 to be self-cleaning in this regard or a self-cleaning mixer 19. This essentially eliminates the use of cleaning agents that create secondary waste. Mixers without self-cleaning ability usually require the use of solvents or abrasive agents that generate secondary waste volume.

Another disclosure comprises using a layer of polymer without waste to both clear the mixer of waste and also form a thin layer of macro-encapsulation of the waste on the top source of the matrix to eliminate any chance of waste particles contacting the outer surface of the monolith, which would potentially provide a source for leaching by entry of water into the monolith.

As an alternative to removing the ion exchange active sites, loading of polymer into the resin beads under vacuum conditions can be utilized to remove most of the retained air in the voids of the resin beads; thus, when the polymer is added and the vacuum removed, the polymer will fill these void spaces, preventing the entry of moisture that would swell the beads. This permits the drying of the ion exchange resin to a point that does not produce acid fumes and yet can obtain a solidified monolith waste form having a volume that is from about 50 to about 98% less than an original volume of the waste material. In further measures the solidified monolith waste form may have a volume that is from about 75 to about 95% less than the original volume of the waste material.

### 6. Waste Container Distribution Step or Sub-system (40)

Since the polymer-waste mixture has very high viscosity when the waste volume is minimized, flow ability is somewhat less than is to be desired. Thus, a leveling mechanism for the waste container 50 can increase the loading in the waste container 50 by 10-20% by permitting the container 50 to be filled to the maximum level possible without overflowing, which would contaminate to the exterior of the container. In dealing with the polymer-waste mixture utilized in Method 10, one does not have to be concerned about eliminating air bubbles which was necessary with older prior art approaches using a concrete mix.

When possible, a non-contact mechanism is the most advantageous, as this mechanism does not become contaminated and have to be replaced periodically. The use of mechanisms, such as shakers, vibrators, or ultrasonic inducers, provides the easiest or most expedient means of creating a relatively level surface. The preferred embodiment is to utilize methods that do not contact the waste but only the container. Other methods may include submersion probes that may either require a disposable sock, a cleaning device to remove the waste from the surface, or discharging the probe into the waste.

Another approach is an indexing table that may move the waste container 50 around to assure an even fill of this container. Another approach is to place a thin sheet or film of plastic over a platen or flat plate that may press on the surface to level the polymer waste leaving the film behind providing an extra barrier at the surface, as discussed above. Another approach within the teachings of the present invention is the employment of a leveling device that may periodically shed its skin to leave the residue behind.

### 7. Preferred Waste Container (50)

A preferred waste container may be lined with a compatible polymer with a sufficient thickness to create an additional macro-encapsulation of the matrix to prevent any possible waste particles from contacting exterior surfaces of the monolith, thus preventing possible sites for leaching or intrusion of water. The use of a similar polymer is advantageous so that the polymer coating will adhere better to the monolith rather than the container. As such, if shrinkage of the monolith should occur, the liner of the waste container will remain as part of the monolith.

### 8. Automated Waste Container Closure and Transfer Step or Sub-system (52)

A conveyor or rail system can provide the transfer mechanism or means within the scope and teachings of the present invention to move the waste container 50 into place for the initial fill, move the container 50 by shaking, vibration, or ultrasonic movement during the initial fill or to apply a leveling mechanism, move the container to a polymerization monitoring station, remotely apply the lid which will lock onto the waste container, and then move the container to the area where a crane or automated forklift device can load the container 50 into a storage area or onto a railcar for shipment to the burial site or for other purposes.

Thus, all the aspects of this step or sub-system 52 can be done by programmable logic controllers (PLC) and/or associated, automated means to protect working personnel from exposure to toxic or radioactive matter, and to maximize loading.

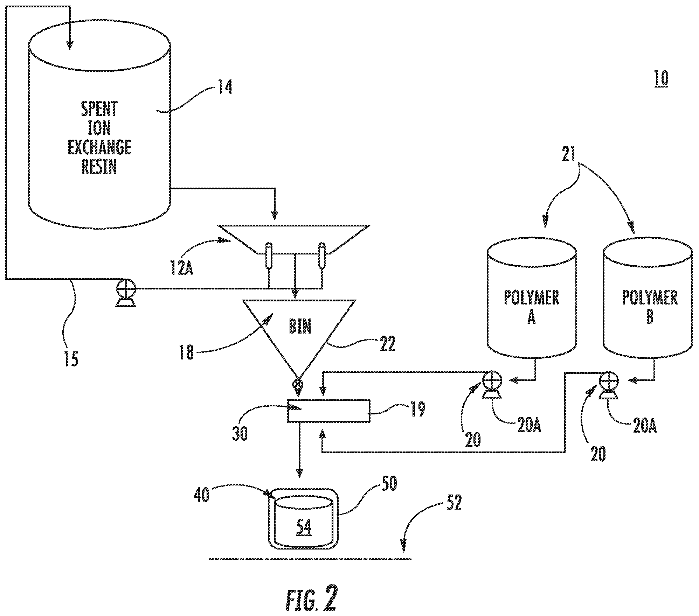

Therefore, FIG. 1 diagrammatically illustrates a preferred embodiment of the present Method 10. In further discussion of this preferred embodiment, the waste is loaded or otherwise provided to the Storage or solids tank or area 14, which will contain particulate solids and spent ion exchange resin or those recycled back to the tank 14, as shown generally in FIG. 1. The Recycle Line 15 extends from the Dewater/Dryer combination 12 to the Storage or solids bin or tank 14 and from the Dewatering sub-system or means 12A, shown schematically in FIG. 2, to the Storage tank 14.

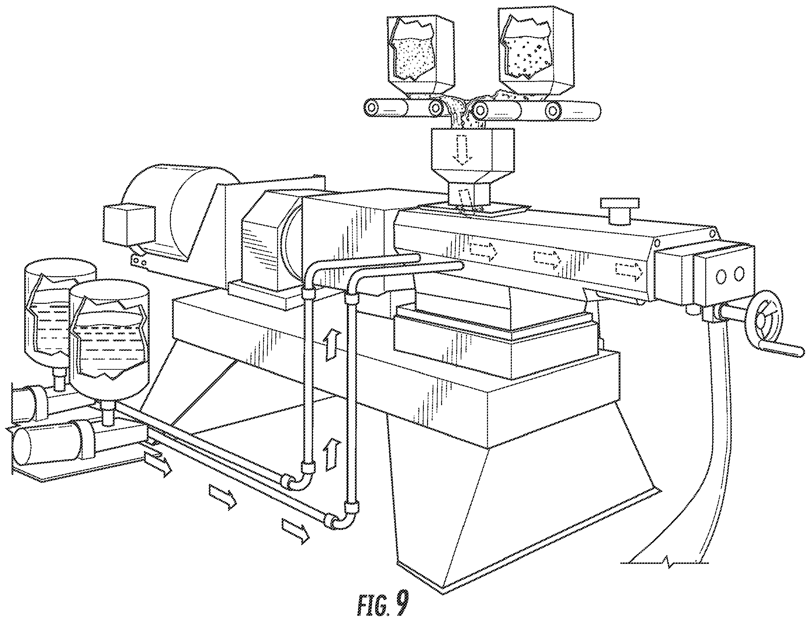

A water sluicing sub-system or means is provided as a vehicle for conveying or moving particulate solids and the spent resin from the storage tank 14 to the Dewater/Dryer combination 12B. The particulate solids in the sluice line 15 are dewatered and dried or evaporated so that the volume of the solids is substantially reduced. These treated solids are then passed or communicated into and through the sluice bin 22. The bin 22 communicates between the Dewater/Dryer 12B and the Mixer 19. Thus the particulate solid, reduced in volume by dewatering and drying or evaporation, is passed or communicated to the Mixer 19. The polymer is metered in Step 20 in or proximate to one or more polymer container(s) or supply area(s) 24. Such metering 20 is facilitated by the metering pump or pumps 20A at a given rate. The Pump 20A characteristically has a metering valve and screw conveyor, among other components. However, it will be understood that there are a number of ways to accomplish metering in step 20 before the polymer from the container 24 is passed, conveyed, or communicated to the Mixer 19, as shown schematically in FIG. 1 by example, where the polymer waste mixing step 30 is conducted. In preferred embodiments, the Mixer 19 is provided as a Continuous Mixer such as that, for example, provided by Readco Kurimoto, LLC, 460 Grim Lane, York, PA 17406 USA. Such an example, without limitation, is illustrated in FIG. 9.

As discussed above, the temperature of the mixing step 30 is monitored so that, in preferred embodiments of the Method 10, the temperature is not permitted, or substantially not permitted, to rise above a temperature where the curing temperature may generate excess stress in the matrix resulting in cracking of the matrix, such that full polymerization and curing of the polymer and solids does not take place in the Mixer 19. In this regard, the contents of the mixed polymer and solids should come from the Mixer 19 as a paste-like substance, which is then transferred or communicated to the Waste container or containers 50. The Monolith 54 is a cured form of the combined polymer and solids which forms, or substantially forms, in the Waste container 50 and where steps 40 and 52 take place.

For example, Figure 2 illustrates a schematic and representational view of a method in accordance with another preferred embodiment of the present invention where a specific volume reduction step is not employed, but a Dewater step 12 is employed.

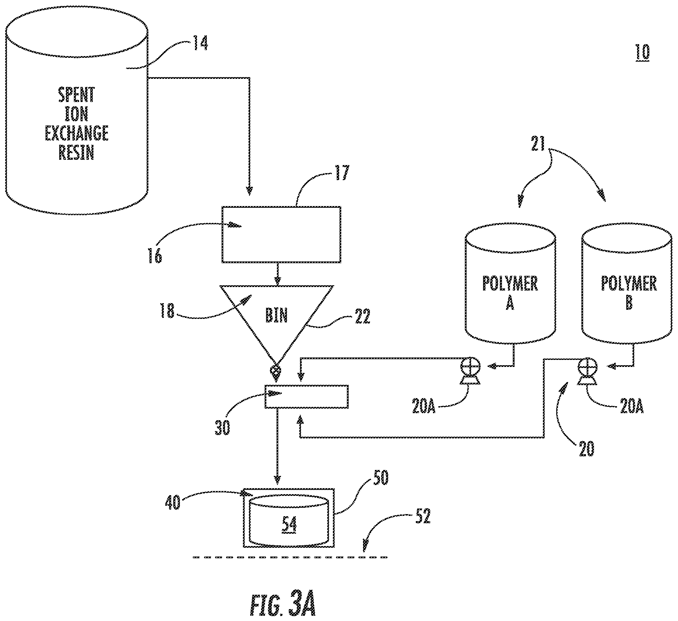

Figure 3A, for example, illustrates a schematic and representational view of a method in accordance with the present invention where a Dryer or dryer means 17, without dewatering, is employed.

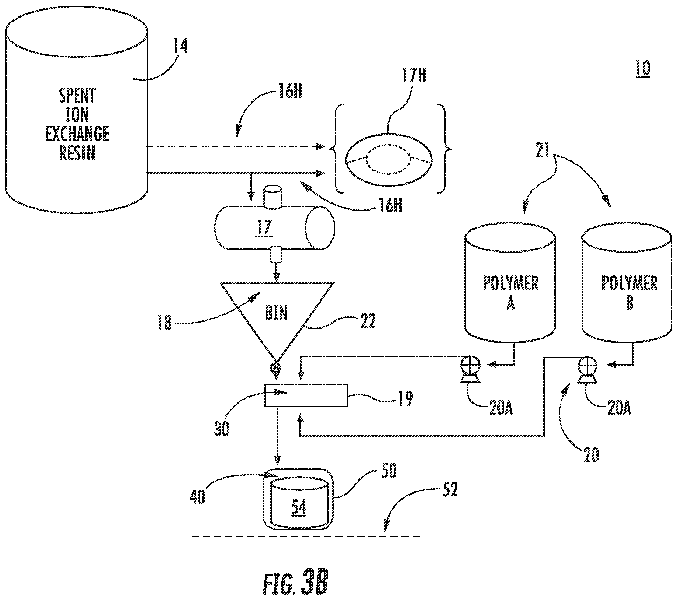

Figure 3B, for example, illustrates a schematic and representational view of a method in accordance with the present invention where a High heating dryer or high heating means 16H, without dewatering, is employed, to raise the temperature to release the water of hydration of a solid or particulate solid waste.

Figure 3C, for example, illustrates a schematic and representational view of a method in accordance with the present invention where a Dewater unit, means, or sub-system 12A and a dryer unit means or sub-system 17 are employed together in a combined means 12B to accomplish dewatering and drying or evaporation.

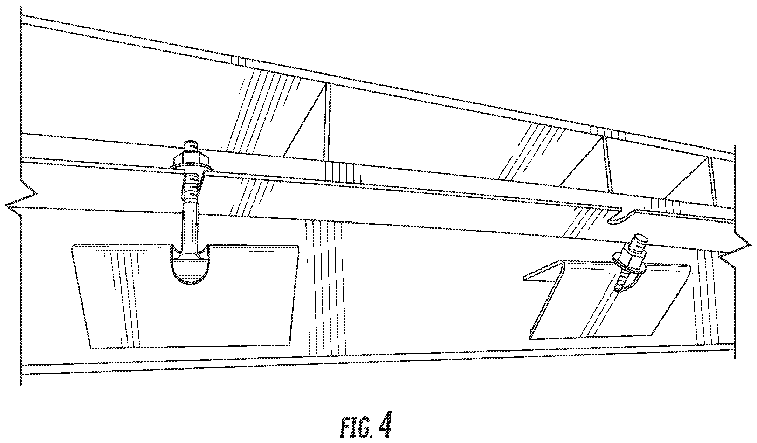

Figure 4, for example, illustrates details of a waste container in which the polymer waste mixture can be loaded and stored for transport and related purposes according to an embodiment of the present invention.

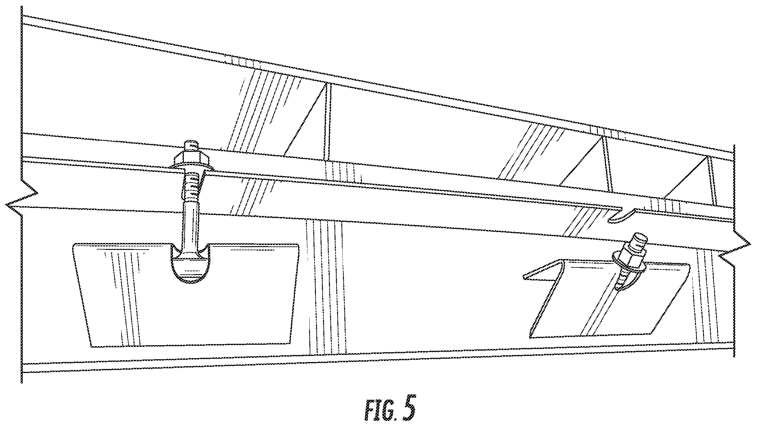

Figure 5, for example, illustrates details of a waste container in which the polymer waste mixture can be loaded and stored for transport and related purposes.

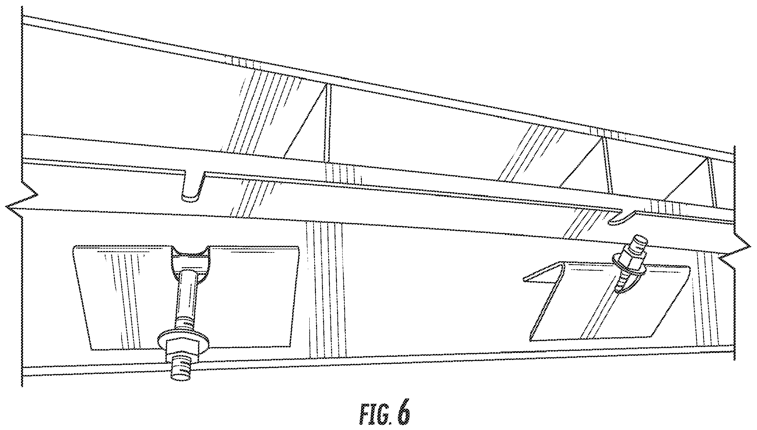

Figure 6, for example, illustrates details of a waste container in which the polymer waste mixture can be loaded and stored for transport and related purposes.

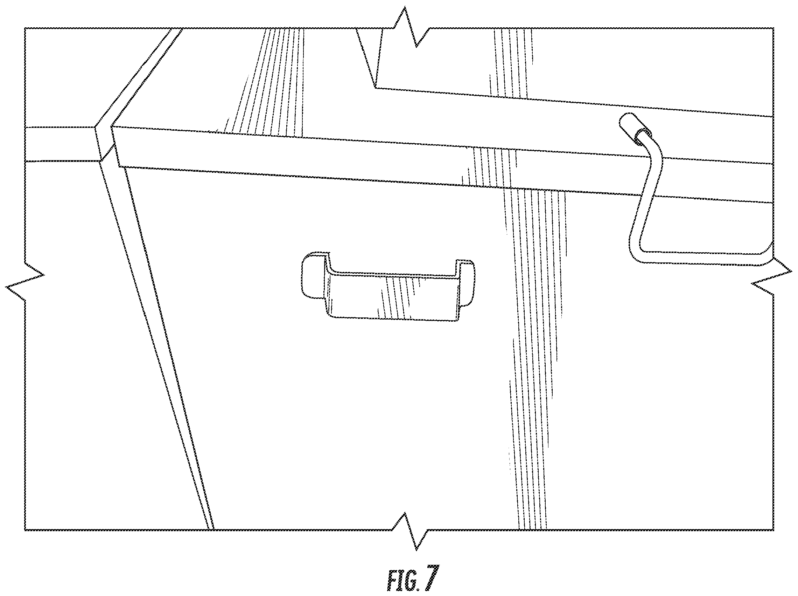

Figure 7, for example, illustrates details of a waste container in which the polymer waste mixture can be loaded and stored for transport and related purposes.

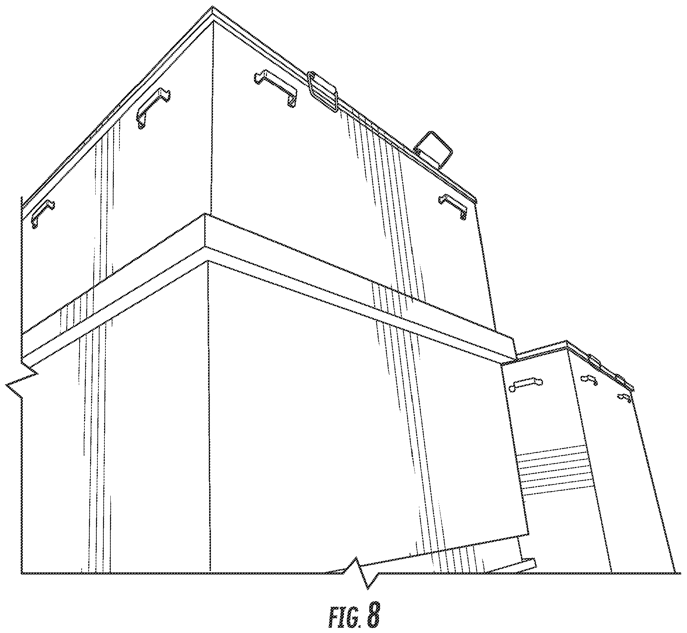

Figure 8, for example, illustrates details of a waste container in which the polymer waste mixture can be loaded and stored for transport and related purposes.

## Claims

1. A method (10) for solidification of a waste material, comprising:
providing a waste material having a first volume;
dewatering (12) the waste material;
drying (16) the dewatered waste material;
storing and metering the waste material to a mixer;
metering (20) a polymer (21) to the mixer (19);
mixing the polymer with the waste material to provide a polymer-waste mixture;
curing the polymer in the polymer-waste mixture to provide a solidified monolith waste form (54) having a continuous polymer matrix encapsulating the waste material; and
wherein the dewatered waste material has a reduced volume from about 50% to about 95% of the original sluice volume of the waste material.

2. The method (10) of claim 1, wherein the dewatered waste material has a reduced volume from about 75% to about 90% of the original volume of the waste material.

3. The method (10) of claim 1, further comprising at least partially decomposing the waste material.

4. The method (10) of claim 3, wherein decomposing the waste material comprises heating (16H) the waste material to a temperature of from about 150° C to about 250° C, wherein the waste material comprises from about 0% to about 80% volume reduction in response to heating.

5. The method (10) of claim 4, wherein the high heating means (17H) is selected from at least one of oil, high pressure steam, electrical resistance heating, microwave heating, or any combination thereof.

6. The method (10) of claim 1, further comprising cooling the waste material after drying (16).

7. The method (10) of claim 1, wherein storing and metering (18) the waste material to the mixer comprises volumetric metering or gravimetric metering.

8. The method (10) of claim 1, wherein the at least one polymer (21) comprises a thermosetting polymer, optionally wherein the thermosetting polymer comprises at least one of an epoxy, a vinyl ester resin or network, a polyester resin system, a fiberglass resin system, or any combination thereof.

9. The method (10) of claim 1, further comprising distributing the polymer-waste mixture among a plurality of waste containers (50), optionally, further comprising closing and transferring the plurality of waste containers.

10. The method (10) of claim 9, wherein each of the plurality of waste containers (50) is lined with at least one polymer (21), and/or comprises a leveling mechanism.

11. The method (10) of claim 10, wherein the leveling mechanism comprises at least one of a shaker, a vibrator, an ultrasonic inducer, an indexing table, or any combination thereof.

12. The method (10) of claim 1, wherein the waste material comprises at least one of radioactive waste or hazardous waste.

13. The method (10) of claim 1, wherein the dewatered and optionally dried waste material has a first feed rate that is proportional to a second feed rate of the metered polymer (20, 21).

14. The method (10) of claim 1, further comprising extruding or extracting the polymer-waste mixture from the mixer without addition of any secondary materials.

15. The method (10) of claim 1, wherein the mixer (19) is a self-cleaning mixer.

## Patentansprüche

1. Verfahren (10) zur Verfestigung eines Abfallmaterials, umfassend:
Bereitstellen eines Abfallmaterials mit einem ersten Volumen;
Entwässern (12) des Abfallmaterials;
Trocknen (16) des entwässerten Abfallmaterials;
Lagern und Abmessen des Abfallmaterials in einen Mischer;
Abmessen (20) eines Polymers (21) in den Mischer (19);
Mischen des Polymers mit dem Abfallmaterial, um ein Polymer-Abfall-Gemisch bereitzustellen;
Härten des Polymers in dem Polymer-Abfall-Gemisch, um eine verfestigte monolithische Abfallform (54) mit einer durchgehenden Polymermatrix bereitzustellen, die das Abfallmaterial einkapselt; und
wobei das entwässerte Abfallmaterial ein reduziertes Volumen von ca. 50% bis ca. 95% des ursprünglichen Ablaufvolumens des Abfallmaterials hat.

2. Verfahren (10) nach Anspruch 1, wobei das entwässerte Abfallmaterial ein reduziertes Volumen von ca. 75% bis ca. 90% des ursprünglichen Volumens des Abfallmaterials hat.

3. Verfahren (10) nach Anspruch 1, darüber hinaus umfassend, das Abfallmaterial zum Teil zu zerlegen.

4. Verfahren (10) nach Anspruch 3, wobei das Zerlegen der Abfallmaterials umfasst, das Abfallmaterial auf eine Temperatur von ca. 150°C bis ca. 250°C zu erhitzen, wobei das Abfallmaterial von ca. 0% bis ca. 80 % Volumenreduktion im Ansprechen auf das Erhitzen umfasst.

5. Verfahren (10) nach Anspruch 4, wobei das Hocherhitzungsmittel (17H) aus mindestens einer Ölerhitzung, Hochdruckdampferhitzung, elektrischen Widerstandserhitzung, Mikrowellenerhitzung oder irgendeiner Kombination aus diesen ausgewählt ist.

6. Verfahren (10) nach Anspruch 1, darüber hinaus umfassend, das Abfallmaterial nach dem Trocknen (16) abzukühlen.

7. Verfahren (10) nach Anspruch 1, wobei das Lagern und Abmessen (18) des Abfallmaterials in den Mischer volumetrisches Abmessen oder gravimetrisches Abmessen umfasst.

8. Verfahren (10) nach Anspruch 1, wobei das mindestens eine Polymer (21) ein wärmehärtendes Polymer umfasst, wobei das wärmehärtende Polymer mindestens ein Epoxid, ein Vinylesterharz oder -Netzwerk, ein Polyesterharzsystem, ein Glasfaserharzsystem oder irgendeine Kombination aus diesen umfasst.

9. Verfahren (10) nach Anspruch 1, darüber hinaus umfassend, das Polymer-Abfallgemisch unter mehreren Abfallbehältern (50) zu verteilen, optional darüber hinaus umfassend, die mehreren Abfallbehälter zu schließen und zu übertragen.

10. Verfahren (10) nach Anspruch 9, wobei die mehreren Abfallbehälter (50) mit mindestens einem Polymer (21) ausgekleidet sind und/oder einen Einebnungsmechanismus umfassen.

11. Verfahren (10) nach Anspruch 10, wobei der Einebnungsmechanismus mindestens einen Shaker, einen Vibrator, einen Ultraschallinduktor, eine Indexierungstabelle oder irgendeine Kombination aus diesen umfasst.

12. Verfahren (10) nach Anspruch 1, wobei das Abfallmaterial mindestens einen radioaktiven Abfall oder gefährlichen Abfall umfasst.

13. Verfahren (10) nach Anspruch 1, wobei das entwässerte und optional getrocknete Abfallmaterial eine erste Einspeisungsrate hat, die proportional zu einer zweiten Einspeisungsrate des abgemessenen Polymers (20, 21) ist.

14. Verfahren (10) nach Anspruch 1, darüber hinaus umfassend, das Polymer-Abfallgemisch aus dem Mischer ohne Zusatz irgendwelcher sekundären Materialien zu extrudieren oder zu extrahieren.

15. Verfahren (10) nach Anspruch 1, wobei der Mischer (19) ein selbstreinigender Mischer ist.

## Revendications

1. Procédé (10) pour la solidification d'un matériau de déchet, comprenant :
l'obtention d'un matériau de déchet ayant un premier volume ;
l'égouttage (12) du matériau de déchet ;
le séchage (16) du matériau de déchet égoutté ;
le stockage et le dosage du matériau de déchet dans un mélangeur ;
le dosage (20) d'un polymère (21) dans le mélangeur (19) ;
le mélange du polymère avec le matériau de déchet pour former un mélange polymère-déchet ;
le durcissement du polymère dans le mélange polymère-déchet pour former une forme de déchet monolithique solidifiée (54) ayant une matrice polymère continue encapsulant le matériau de déchet ; et
dans lequel le matériau de déchet égoutté a un volume réduit d'environ 50 % à environ 95 % du volume de pertuis original du matériau de déchet.

2. Procédé (10) selon la revendication 1, dans lequel le matériau de déchet égoutté a un volume réduit d'environ 75 % à environ 90 % du volume original du matériau de déchet.

3. Procédé (10) selon la revendication 1, comprenant en outre la décomposition au moins partielle du matériau de déchet.

4. Procédé (10) selon la revendication 3, dans lequel la décomposition du matériau de déchet comprend le chauffage (16H) du matériau de déchet à une température d'environ 150°C à environ 250°C, dans lequel le matériau de déchet comprend d'environ 0 % à environ 80 % de réduction de volume en réponse au chauffage.

5. Procédé (10) selon la revendication 4, dans lequel le moyen de chauffage élevé (17H) est au moins l'un choisi parmi un chauffage par huile, vapeur haute pression, résistance électrique, un chauffage par micro-ondes, ou l'une quelconque de leurs combinaisons.

6. Procédé (10) selon la revendication 1, comprenant en outre le refroidissement du matériau de déchet après le séchage (16).

7. Procédé (10) selon la revendication 1, dans lequel le stockage et le dosage (18) du matériau de déchet dans le mélangeur comprend un dosage volumétrique ou un dosage gravimétrique.

8. Procédé (10) selon la revendication 1, dans lequel l'au moins un polymère (21) comprend un polymère thermodurcissable, éventuellement dans lequel le polymère thermodurcissable comprend au moins l'un parmi un époxy, une résine ou un réseau d'ester vinylique, un système de résine de polyester, un système de résine à fibres de verre, ou l'une quelconque de leurs combinaisons.

9. Procédé (10) selon la revendication 1, comprenant en outre la distribution du mélange polymère-déchet parmi une pluralité de conteneurs à déchet (50), éventuellement comprenant en outre la fermeture et le transfert de la pluralité de conteneurs à déchet.

10. Procédé (10) selon la revendication 9, dans lequel chacun parmi la pluralité de conteneurs à déchet (50) est tapissé d'au moins un polymère (21), et/ou comprend un mécanisme de nivellement.

11. Procédé (10) selon la revendication 10, dans lequel le mécanisme de nivellement comprend au moins l'un parmi un agitateur, un vibrateur, un inducteur d'ultrasons, une table indexable, ou l'une quelconque de leurs combinaisons.

12. Procédé (10) selon la revendication 1, dans lequel le matériau de déchet comprend au moins l'un parmi un déchet radioactif et un déchet dangereux.

13. Procédé (10) selon la revendication 1, dans lequel le matériau de déchet égoutté et éventuellement séché a un premier débit d'alimentation qui est proportionnel à un deuxième débit d'alimentation du polymère dosé (20, 21).

14. Procédé (10) selon la revendication 1, comprenant en outre l'extrusion ou l'extraction du mélange polymère-déchet hors du mélangeur sans l'addition de quelconques matériaux secondaires.

15. Procédé (10) selon la revendication 1, dans lequel le mélangeur (19) est un mélangeur autonettoyant.
